# EUROPEAN PATENT APPLICATION

(11) **EP 4 751 898 A1**
(43) Date of publication of application: **03.06.2026**
(21) Application number: 25211779.1
(22) Date of filing: 28.10.2025
(51) Int. Cl.: B29C 70/20, B29C 70/52, B29C 70/54, B29D 99/00

(54) **FRP BAR FORMING APPARATUS**

(30) Priority: 28.11.2024 JP 2024207329
(71) Applicant: Tsudakoma Kogyo Kabushiki Kaisha, Kanazawa-shi, Ishikawa-ken 921-8650 (JP); Kanazawa Institute of Technology, Nonoichi-shi Ishikawa 921-8501 (JP)
(72) Inventor: YAMAMURA, Koji, Kanazawa-shi, 921-8650 (JP); NISHIMURA, Isao, Kanazawa-shi, 921-8650 (JP); KAWAMOTO, Nobuya, Kanazawa-shi, 921-8650 (JP); UZAWA, Kiyoshi, Nonoichi-shi, 921-8501 (JP)
(74) Representative: Zimmermann & Partner Patentanwälte mbB

(57) **Abstract**

An FRP bar forming apparatus (1) configured to form an FRP bar (8) from a plurality of reinforcing fiber bundles (7). The apparatus (1) includes an impregnation device (2) and a drawing device (3). The impregnation device (2) includes a resin tank (11). The resin tank (11) includes an introduction portion (11a) and a discharge portion (11b). The apparatus (1) draws out each of the reinforcing fiber bundles (7) passing through the resin tank (11) from the resin tank (11) by the drawing device (3). The apparatus (1) further includes a twisting device (6) provided downstream of the resin tank (11) and twists the reinforcing fiber bundles (7) so as to twist together the plurality of reinforcing fiber bundles (7) in the gathered state. The impregnation device (2) includes: a first guide plate (21), a second guide plate (22), and a fiber-opening structure (31). The fiber-opening structure (31) includes a fiber-opening portion (33) and an inner guide portion (32).

## Description

### TECHNICAL FIELD

The present invention relates to an FRP bar forming apparatus configured to form an FRP bar from a plurality of reinforcing fiber bundles, the apparatus including: an impregnation device including a resin tank configured to store a thermoplastic resin and including an introduction portion through which each of the reinforcing fiber bundles is introduced and a discharge portion through which each of the reinforcing fiber bundles is discharged in a gathered state; and a drawing device provided downstream of the resin tank, the FRP bar forming apparatus being configured to draw out each of the reinforcing fiber bundles passing through the resin tank from the resin tank by the drawing device.

### BACKGROUND ART

Recently, FRP bars, which are metal reinforcing bars (rod-shaped reinforcing members) used for reinforcing concrete and the like, are attracting attention as they are lighter, extremely stronger, and more durable than steel bars of the related art. In addition, as the FRP bar, an FRP bar is known which includes a plurality of reinforcing fiber bundles, such as carbon fiber bundles or basalt fiber bundles, and is formed by impregnating the plurality of reinforcing fiber bundles with a thermoplastic resin.

As an FRP bar forming apparatus that forms an FRP bar by impregnating a plurality of reinforcing fiber bundles with a thermoplastic resin in this way, for example, there is an apparatus disclosed in Patent Literature 1 (hereinafter referred to as "apparatus of the related art"). The apparatus of the related art includes an impregnation device including a resin tank (immersion device) in which a thermoplastic resin is stored, and a drawing device (pulling belt) provided downstream of the resin tank. In addition, the resin tank in the impregnation device has an introduction portion (a plurality of fiber-through holes opened on an upper surface) into which a plurality of reinforcing fiber bundles (reinforcing fiber material) are introduced, and a discharge portion (a through hole in communication with a through hole of a molding die fixed to the immersion device) through which each of the reinforcing fiber bundles is discharged in a gathered state.

In the apparatus of the related art, the plurality of reinforcing fiber bundles are introduced into the resin tank through the introduction portion and are pulled out in such a manner that they are drawn out from the discharge portion of the resin tank by the drawing device provided downstream of the resin tank, so that the reinforcing fiber bundles are caused to pass through the resin tank. By passing through the resin tank in this way, the reinforcing fiber bundles pass through the thermoplastic resin stored in the resin tank, and are thus impregnated with the thermoplastic resin.

### CITATION LIST

### PATENT LITERATURE

Patent Literature 1: JP2022-104567A

However, the apparatus of the related art includes a plurality of guide members arranged at intervals in a direction, in which the reinforcing fiber bundles pass, in the resin tank of the impregnation device in order to sufficiently impregnating the reinforcing fiber bundles with the thermoplastic resin. The plurality of guide members have through holes through which the reinforcing fiber bundles are caused to pass, and one of two adjacent guide members is formed with the through holes in such a manner as to guide the reinforcing fiber bundles at an outer position, while the other is formed with the through holes in such a manner as to guide the reinforcing fiber bundles at an inner position (a position inward of the outer position).

Accordingly, in the apparatus of the related art, the reinforcing fiber bundles introduced into the resin tank are guided by the through holes of the respective guide members such that, in one of the guide members, they are guided while being pushed downward from the outer position toward the inner position, and in the other guide member, they are guided while being pushed upward from the inner position toward the outer position. As a result, the reinforcing fiber bundles are brought into a state in which they are pressed against inner peripheral surfaces of the through holes in the respective guide members.

Note that, in the apparatus of the related art, the through holes through which the reinforcing fiber bundles are guided are formed as circular holes having a true circular shape. Therefore, when the reinforcing fiber bundles are pressed against the inner peripheral surfaces of the through holes as described above, each of the reinforcing fiber bundles is pressed and narrowed toward the center side of an arcuate portion of the inner peripheral surface with which it comes into contact, and is thus brought into a state in which the reinforcing fibers are gathered. As a result, it becomes difficult for the thermoplastic resin to enter between the reinforcing fibers in the reinforcing fiber bundle, and the thermoplastic resin is not sufficiently impregnated into the reinforcing fiber bundle. In addition, when forming an FRP bar, if the thermoplastic resin is not sufficiently impregnated into each reinforcing fiber bundle, an FRP bar with sufficient strength cannot be obtained.

### SUMMARY

In view of the above circumstances, an object of the present invention is to provide a configuration capable of obtaining an FRP bar with sufficient strength in an FRP bar forming apparatus configured to form an FRP bar by impregnating a plurality of reinforcing fiber bundles with a thermoplastic resin.

The present invention is an FRP bar forming apparatus configured to form an FRP bar from a plurality of reinforcing fiber bundles. A preamble of the present invention is an FRP bar forming apparatus including: an impregnation device including a resin tank configured to store a thermoplastic resin and including an introduction portion through which each of the reinforcing fiber bundles is introduced and a discharge portion through which each of the reinforcing fiber bundles is discharged in a gathered state; and a drawing device provided downstream of the resin tank, the FRP bar forming apparatus being configured to draw out each of the reinforcing fiber bundles passing through the resin tank from the resin tank by the drawing device. In addition, in order to achieve the above object, the present invention is characterized by including the following twisting device and the impregnation device.

The twisting device is provided downstream of the resin tank and twists the reinforcing fiber bundles so as to twist together the plurality of reinforcing fiber bundles in the gathered state. The impregnation device includes a first guide plate, a second guide plate, and a fiber-opening structure, as described below. The first guide plate is provided within the resin tank and is formed with a plurality of through holes for allowing the plurality of reinforcing fiber bundles from the introduction portion to pass therethrough, the plurality of through holes being arranged along a circumferential pattern. The second guide plate is provided between the first guide plate and the discharge portion, and is formed with a plurality of through holes for allowing the plurality of reinforcing fiber bundles from the introduction portion to pass therethrough, the plurality of through holes being arranged along a circumferential pattern. The fiber-opening structure is provided upstream of the second guide plate. The fiber-opening structure includes a fiber-opening portion including an outward-facing arcuate surface being convex outwardly and serving as a guide surface for guiding the reinforcing fiber bundles, and an inner guide portion configured to guide the reinforcing fiber bundles at a position inward of the outward-facing arcuate surface, on an upstream side of the fiber-opening portion. Here, "arranged along a circumferential pattern" includes not only circles (perfect circles, true circles) but also ellipses and other closed curved circumferential paths.

In addition, in the FRP bar forming apparatus of the present invention, the fiber-opening portion of the fiber-opening structure may be configured by a fiber-opening member having the outward-facing arcuate surface on its outer peripheral surface.

In addition, the fiber-opening structure may include a fiber-gathering portion provided downstream of the fiber-opening portion and including an inward-facing arcuate surface being concave inwardly and serving as a guide surface for guiding the reinforcing fiber bundles.

In addition, the impregnation device may include a guide member provided between the second guide plate and the discharge portion and configured to guide the reinforcing fiber bundles at a position inward of all of the through holes in the second guide plate.

In the FRP bar forming apparatus according to the present invention, a plurality of reinforcing fiber bundles introduced into the resin tank of the impregnation device are first guided in such a manner as to pass through the plurality of through holes in the first guide plate. Note that since the plurality of through holes in the first guide plate are formed in such a manner as to be arranged along a circumferential pattern, the plurality of reinforcing fiber bundles are brought into a guided state in which they are arranged in a circular pattern, on a downstream side of the first guide plate.

Next, in the fiber-opening structure, each reinforcing fiber bundle is guided in the inner guide portion and then guided in the fiber-opening portion. In the inner guide portion, each reinforcing fiber bundle is guided at a position inward of the guide surface of the fiber-opening portion, and thus, each reinforcing fiber bundle is pressed against the guide surface of the fiber-opening portion. In addition, since the guide surface of the fiber-opening portion is an outwardly convex, outward-facing arcuate surface, each reinforcing fiber bundle is subjected to a force that causes it to spread along the arc of the guide surface, and as a result, is brought into a fiber-opened state.

Therefore, according to the FRP bar forming apparatus, in the resin tank of the impregnation device, each reinforcing fiber bundle is in a fiber-opened state in the fiber-opening portion of the fiber-opening structure. Thereby, compared to an apparatus of the related art configured such that reinforcing fibers are in a gathered state within a resin tank, each reinforcing fiber bundle is sufficiently impregnated with a thermoplastic resin. As a result, an FRP bar with sufficient strength can be obtained. In addition to this, in the FRP bar forming apparatus of the present invention, the twisting device is provided downstream of the resin tank, so that the plurality of reinforcing fiber bundles drawn out in a gathered state from the resin tank are twisted (twisted together). Thereby, the roundness and fiber volume content of the FRP bar become higher, and consequently, an FRP bar with higher strength can be obtained.

Note that when the twisting of the plurality of reinforcing fiber bundles (hereinafter simply referred to as "twisting") is performed on the downstream side of the resin tank as described above, the effect of the twisting propagates into the resin tank via the discharge portion. When the effect of the twisting propagates to the fiber-opening structure, there is a concern that each reinforcing fiber bundle on the fiber-opening portion of the fiber-opening structure will receive a force in a twisting direction (a direction in which the plurality of reinforcing fiber bundles are aligned), resulting in insufficient fiber-opening, and thus insufficient impregnation of the thermoplastic resin into each reinforcing fiber bundle.

In contrast, in the FRP bar forming apparatus of the present invention, the second guide plate formed with the plurality of through holes arranged in a shape (along a circumferential pattern) corresponding to the plurality of reinforcing fiber bundles guided (along a circumferential shape) by the first guide plate is provided downstream of the fiber-opening structure, that is, between the discharge portion and the fiber-opening structure, and the plurality of reinforcing fiber bundles having passed through the fiber-opening structure are guided in such a manner as to pass through the plurality of through holes in the second guide plate. The respective reinforcing fiber bundles are guided in such a manner as to pass through the through holes in the second guide plate, so that displacement in the twisting direction of each reinforcing fiber bundle, associated with the twisting, is restricted by the through hole, and as a result, the effect of the twisting is prevented from propagating to the fiber-opening structure (upstream of the second guide plate). Thereby, in the FRP bar forming apparatus, insufficient fiber-opening of each reinforcing fiber bundle in the fiber-opening structure (fiber-opening portion) is avoided, and sufficient impregnation of the thermoplastic resin into each reinforcing fiber bundle is more reliably realized.

In addition, the fiber-opening portion in the fiber-opening structure can be realized more simply by configuring the fiber-opening portion with a fiber-opening member having an outward-facing arcuate surface on its outer peripheral surface.

Specifically, when configuring a fiber-opening portion to have an outward-facing arcuate surface, for example, forming a curved elongated hole (through hole) in the fiber-opening portion is also considered. In this case, an outwardly convex portion of an inner peripheral surface of the curved elongated hole becomes an outward-facing arcuate surface. However, in order to form the fiber-opening portion in such a manner, it is necessary to perform processing on the member to form such a curved elongated hole.

In contrast, when a fiber-opening member (e.g., a ring-shaped or disc-shaped member) having an outward-facing arcuate surface on its outer peripheral surface (the outer peripheral surface is an arcuate surface) is adopted as the fiber-opening portion, there is no need to perform the processing described above on the member, so the fiber-opening portion can be realized more simply.

In addition, by configuring the fiber-opening structure so as to include, on the downstream side of the fiber-opening portion, the fiber-gathering portion having an inwardly concave, inward-facing arcuate surface serving as a guide surface for guiding the reinforcing fiber bundles, sufficient impregnation of the thermoplastic resin into each reinforcing fiber bundle is more effectively achieved.

Specifically, when the fiber-opening structure is configured to include the fiber-gathering portion on the downstream side of the fiber-opening portion, in the fiber-opening structure, each reinforcing fiber bundle in a fiber-opened state in the fiber-opening portion is guided on the inward-facing arcuate surface of the fiber-gathering portion on the downstream side of the fiber-opening portion. Thereby, each reinforcing fiber bundle is narrowed along the arc of the inward-facing arcuate surface, and as a result, is brought into a state in which the reinforcing fibers are gathered (a state in which each reinforcing fiber bundle is fiber-gathered). According to such a configuration, the thermoplastic resin between the reinforcing fibers in each reinforcing fiber bundle in the fiber-opened state in the fiber-opening portion moves in multiple directions along with the gathering of the fibers. Thereby, in each reinforcing fiber bundle, the thermoplastic resin is widely spread throughout the reinforcing fiber bundle, and as a result, sufficient impregnation of the thermoplastic resin into each reinforcing fiber bundle is more effectively achieved.

In addition, by configuring the impregnation device to include the guide member provided between the second guide plate and the discharge portion and configured to guide the reinforcing fiber bundles at a position inward of all of the through holes in the second guide plate, each reinforcing fiber bundle is guided at a position close to the center of the twisting by the guide member. Thereby, the roundness and fiber volume content of the FRP bar become higher, and consequently, an FRP bar with higher strength can be obtained.

### BRIEF DESCRIPTION OF DRAWINGS

FIG. 1 is a side view showing an embodiment of an FRP bar forming apparatus according to the present invention.
FIG. 2 is a perspective view showing an impregnation device.
FIG. 3 is a side cross-sectional view of a resin tank of the impregnation device.
FIG. 4 is a partially enlarged view of a fiber-opening member and a first guide plate, as viewed from a downstream side.
FIG. 5 is a front view showing a drawing device and an FRP bar, as viewed from an upstream side.
FIG. 6 is a side view showing the drawing device.

### DESCRIPTION OF EMBODIMENTS

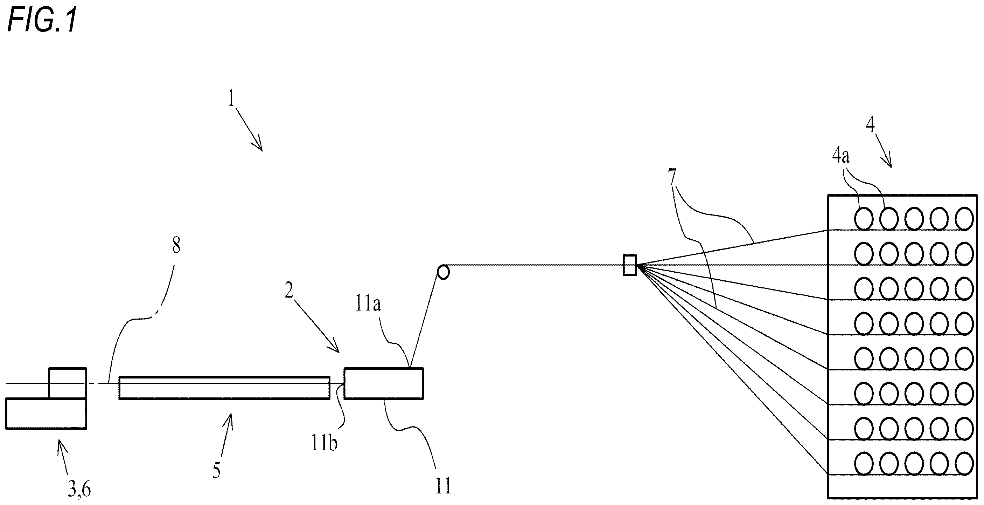

Hereinafter, an embodiment of an FRP bar forming apparatus according to the present invention will be described based on FIGS. 1 to 6.

As shown in FIG. 1, an FRP bar forming apparatus 1 includes an impregnation device 2 into which reinforcing fiber bundles 7 are introduced, the impregnation device impregnating the reinforcing fiber bundles 7 with a thermoplastic resin, and a drawing device 3 provided downstream of the impregnation device 2 with respect to a travel path of the reinforcing fiber bundles 7 and configured to draw out (pull out) the reinforcing fiber bundles 7 from the impregnation device 2.

Note that the reinforcing fiber bundles 7 are supplied from a supply device 4 provided upstream of the FRP bar forming apparatus 1 (impregnation device 2) with respect to the travel path. In addition, the supply device 4 is configured such that a plurality of material rolls 4a, in which the reinforcing fiber bundles 7 are wound into a roll shape, are mounted thereto. Therefore, the plurality of reinforcing fiber bundles 7 drawn out (supplied) from the supply device 4 are introduced into the impregnation device 2 of the FRP bar forming apparatus 1.

In addition, in the FRP bar forming apparatus 1, the impregnation device 2 includes a resin tank 11 in which a thermoplastic resin is stored, in order to impregnate the reinforcing fiber bundles 7 with the thermoplastic resin as described above. In addition, the resin tank 11 includes an introduction portion 11a through which each reinforcing fiber bundle 7 is introduced, and a discharge portion 11b through which each reinforcing fiber bundle 7 is discharged in a gathered state. Each reinforcing fiber bundle 7 introduced into the resin tank 11 through the introduction portion 11a passes through the thermoplastic resin stored in the resin tank 11 and is discharged from the discharge portion 11b, as it is advanced by the pulling action of the drawing device 3 provided on the downstream side. Thereby, each reinforcing fiber bundle 7 is drawn out from the resin tank 11 in a state in which it is impregnated with the thermoplastic resin.

In addition, a cooling device 5 is provided between the resin tank 11 and the drawing device 3 to cool the reinforcing fiber bundles 7 (impregnated with the thermoplastic resin). Therefore, the plurality of reinforcing fiber bundles 7 drawn out in a gathered state from the discharge portion 11b of the resin tank 11 are cooled in the cooling device 5 and formed into an FRP bar 8. Note that, as the cooling device 5, for example, a water cooling-type device is adopted which includes, as a main body, a water tank storing water and is configured to allow the reinforcing fiber bundles 7 to pass therethrough.

As for the FRP bar forming apparatus 1 as described above, in the present invention, the FRP bar forming apparatus 1 includes a twisting device 6 that twists together the plurality of reinforcing fiber bundles 7 in a gathered state, on a downstream side of the resin tank 11 of the impregnation device 2.

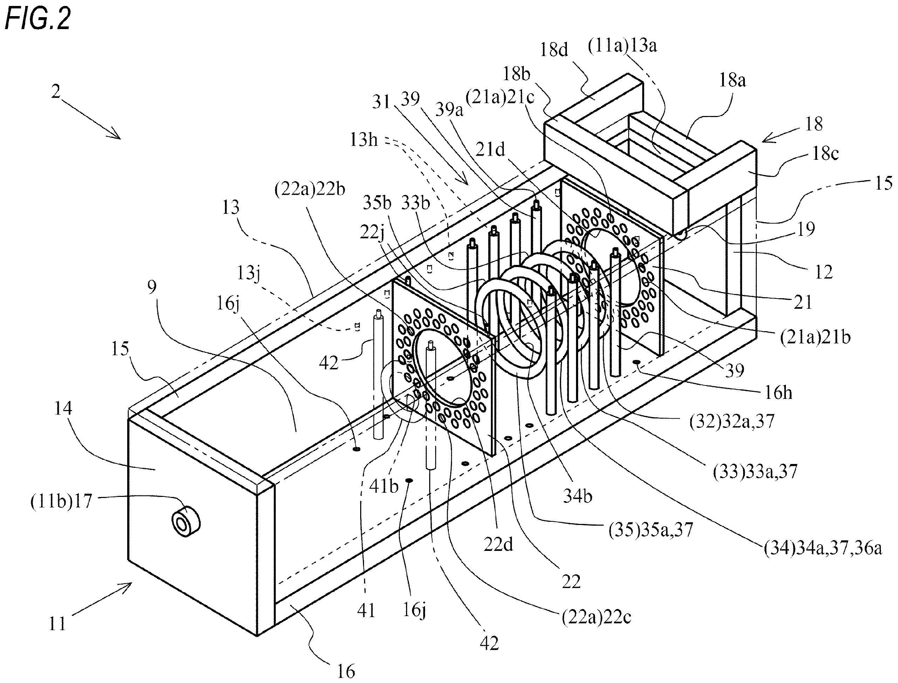

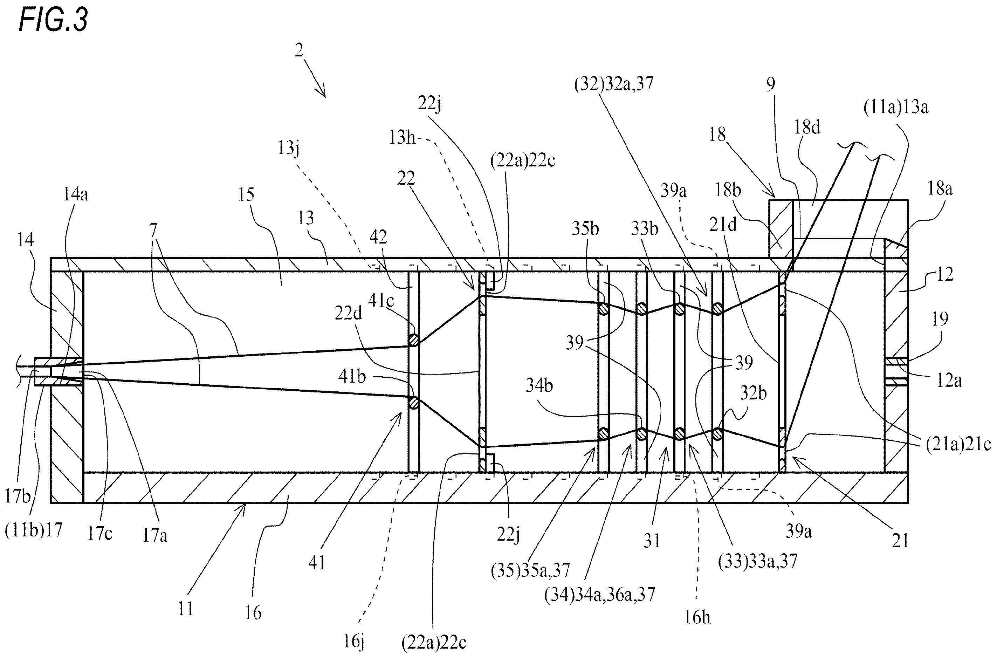

In addition, as shown in FIGS. 2 and 3, the impregnation device 2 includes, in the resin tank 11, a first guide plate 21 that guides the plurality of reinforcing fiber bundles 7 from the introduction portion 11a in such a manner as to be arranged in a circular pattern, a second guide plate 22 that guides the plurality of reinforcing fiber bundles 7 in such a manner as to be arranged in a circular pattern between the first guide plate 21 and the discharge portion 11b, and a fiber-opening structure 31 for fiber-opening each reinforcing fiber bundle 7 on an upstream side of the second guide plate 22.

In addition, the fiber-opening structure 31 includes a fiber-opening portion 33 having a guide surface 33b for guiding the reinforcing fiber bundles 7 such that the reinforcing fiber bundles 7 are brought into a fiber-opened state, and an inner guide portion 32 that guides the reinforcing fiber bundles 7 at a position inward of the guide surface 33b, on an upstream side of the fiber-opening portion 33.

In addition, in the present embodiment, the fiber-opening portion 33 is assumed to be configured by a fiber-opening member 33a having a guide surface 33b on its outer peripheral surface. In addition, in the present embodiment, the fiber-opening structure 31 is configured to include a fiber-gathering portion 34 provided downstream of the fiber-opening portion 33 and having a guide surface 34b for guiding the reinforcing fiber bundles 7 such that the reinforcing fibers of the reinforcing fiber bundles 7, which have been fiber-opened in the fiber-opening portion 33, are brought into a gathered state. Further, in the present embodiment, the impregnation device 2 is assumed to include a guide member 41 that is provided between the second guide plate 22 and the discharge portion 11b and guides the reinforcing fiber bundles 7 at a position inward of the guide positions of the reinforcing fiber bundles 7 in the second guide plate 22.

The configuration of the FRP bar forming apparatus 1 will be specifically described as follows.

As shown in FIGS. 2 and 3, the resin tank 11 is formed as a hollow housing having a substantially rectangular parallelepiped shape. The resin tank 11 is provided in a direction in which a longitudinal direction of an upper surface thereof coincides with a direction of the travel path (travel direction).

In addition, a supply nozzle 19 for supplying the thermoplastic resin 9 to be stored inside the resin bath 11 is provided to the resin bath 11. Specifically, in the resin tank 11, an attachment hole 12a, which penetrates an upstream-side end wall (front wall) 12 with respect to the travel direction and to which the supply nozzle 19 is attached, is formed in the front wall 12. Additionally, the supply nozzle 19 is attached to the front wall 12 in such a manner that it is fitted into the attachment hole 12a. Note that the supply nozzle 19 is connected to an extruder (not shown) that supplies the thermoplastic resin 9. Thereby, the thermoplastic resin 9 from the extruder is supplied into the resin tank 11 via the supply nozzle 19 and stored in the resin tank 11.

In addition, an opening portion 13a that functions as the introduction portion 11a is formed in an upper wall 13 of the resin tank 11. Note that the opening portion 13a is provided at an upstream-side end with respect to the travel direction, is opened in a rectangular shape extending across a width of the resin tank 11, and is sized to allow introduction of the plurality of reinforcing fiber bundles 7 from the supply device 4.

In addition, the resin tank 11 includes an introduction frame 18 including four wall portions 18a to 18d erected in such a manner that they surround the opening portion 13a (introduction portion 11a). Note that among the wall portions 18a to 18d that constitute the introduction frame 18, the front wall portion 18a on the front wall 12 is formed to be lower in height than the other wall portions 18b, 18c, and 18d. Thereby, as the thermoplastic resin 9 is supplied into the resin tank 11 and overflows from the space within the resin tank 11, the thermoplastic resin 9 is allowed to overflow from the front wall portion 18a of the introduction frame 18.

In addition, a cylindrical discharge member 17 that functions as the discharge portion 11b is attached to a downstream-side end wall (rear wall) 14 of the resin tank 11 with respect to the travel direction, Note that the rear wall 14 is formed with a through hole 14a penetrating the rear wall 14 and sized to allow the discharge member 17 to be fitted therein.

In addition, the discharge member 17 is formed in a hollow cylindrical shape having a hole for discharge (discharge hole) 17a penetrating in an axial direction thereof. Additionally, the discharge hole 17a in the discharge member 17 is formed such that an outlet-side portion 17b has an inner diameter approximately equal to an outer diameter of the FRP bar 8, and an inlet 17c has a larger diameter, and such that a tapered shape is formed continuously from the inlet 17c to the outlet-side portion 17b. Additionally, the discharge member 17 is attached to the resin tank 11 in such a manner that it is fitted into the through hole 14a of the rear wall 14. However, in the attached state, the discharge member 17 is provided such that the outlet side thereof is oriented downstream and the outlet-side portion 17b is located outside the resin tank 11.

As shown in FIGS. 2 and 3, in the resin tank 11 configured as described above, the first guide plate 21, the second guide plate 22, the fiber-opening structure 31, and the guide member 41 are provided as described above. Note that among these components, the first guide plate 21 and the second guide plate 22 are formed as members having approximately the same shape and the like in the present embodiment. As for the first guide plate 21 and the second guide plate 22, both guide plates 21 and 22 are configured as plate-shaped members having a rectangular shape.

The first guide plate 21 is provided in a direction in which its plate thickness direction coincides with the travel direction, at a position close to a downstream-side edge of the introduction portion 11a (opening portion 13a) with respect to the travel direction. In addition, the second guide plate 22 is provided in the same direction as the first guide plate 21, on the downstream side of the first guide plate 21 with respect to the travel direction. Note that each of the guide plates 21 and 22 has a dimension in the longitudinal direction of its end surface that is approximately equal to a spacing between two sidewalls 15 and 15 of the resin tank 11, and a dimension in the lateral direction that is approximately equal to a spacing between an upper wall 13 and a lower wall 16 of the resin tank 11. Therefore, each of the guide plates 21 and 22, when provided as described above, is in a state in which its side edges are in contact with the upper wall 13, the lower wall 16 and both sidewalls 15, 15 of the resin tank 11.

Additionally, each of the guide plates 21 and 22 has a plurality of through holes 21a, 22a for guiding the plurality of reinforcing fiber bundles 7 (for allowing the bundles to pass) therethrough. In each of the guide plates 21 and 22, the plurality of through holes 21a, 22a are formed to be arranged along a circumferential pattern.

More specifically, in the example shown, each of the guide plates 21 and 22 is formed with forty through-holes 21a, 22a arranged in rows that form substantially true circular patterns centered on the center of each of the guide plates 21 and 22. However, the forty through holes 21a, 22a are arranged in rows, with twenty holes in each row, such that their positions differ in the radial direction of the circle. That is, twenty through-holes 21a, 22a are arranged in a row as described above, and the remaining twenty through-holes 21a, 22a are likewise arranged in a row located further outward in the radial direction. In other words, the through holes 21a, 22a are formed in two rows, with twenty holes in each row, at different radial positions.

Note that the forty through holes 21a, 22a are formed at different radial positions, so that each of the guide plates 21 and 22 has more through holes formed in a desired size for allowing the reinforcing fiber bundles 7 to pass therethrough, compared to a case where the through holes are formed in a single row.

In addition, the through holes 21a, 22a in the inner row (inner through holes 21b, 22b) and the through holes 21a, 22a in the outer row (outer through holes 21c, 22c) are formed with their positions shifted in the circumferential direction in order to prevent the reinforcing fiber bundles 7 being guided at the same positions in the circumferential direction. Note that the positions of the respective through-holes 21a, 22a are set such that a line connecting the center of each through-hole 21a, 22a in one row to the center of the circle lies exactly midway between two lines respectively connecting the centers of two adjacent through-holes 21a, 22a in the other row to the center of the circle. Thereby, the position in the circumferential direction of the reinforcing fiber bundle 7 guided to each of the through holes 21a, 22a in one row is set between two reinforcing fiber bundles 7 guided to two adjacent through holes 21a, 22a in the other row.

In addition, each of the guide plates 21 and 22 has, in addition to the plurality of through holes 21a, 22a, a large-diameter central hole 21d, 22d formed to penetrate the guide plate at a position inward of the inner through holes 21b, 22b and having an outer periphery near the inner through holes. Therefore, each of the guide plates 21 and 22 is configured to allow the thermoplastic resin 9 to pass through the central hole 21d, 22d as well.

As for the two guide plates 21 and 22 configured as described above, the first guide plate 21 is provided such that its side edges in contact with the lower wall 16 and both sidewalls 15 of the resin tank 11 are fixed thereto. In addition, in the present embodiment, the second guide plate 22 is provided such that its attachment position in the travel direction can be changed relative to the resin tank 11 (any one of a plurality of attachment positions can be selected), as will be described in detail below.

As for the fiber-opening structure 31, the fiber-opening portion 33 in the fiber-opening structure 31 is, in the present embodiment, configured by a fiber-opening member 33a having a guide surface 33b on its outer peripheral surface, as described above. In addition, in the present embodiment, the inner guide portion 32, as with the fiber-opening portion 33, is also configured by a member (hereinafter, referred to as "inner guide member 32a") having a guide surface 32b for guiding the reinforcing fiber bundles 7. In addition, the fiber-gathering portion 34 is also configured by a member (hereinafter, referred to as "fiber-gathering member 34a") having a guide surface 34b.

In the present embodiment, the fiber-opening member 33a, the inner guide member 32a, and the fiber-gathering member 34a are the same members, and ring-shaped members having a substantially true circular shape (hereinafter, simply referred to as "ring members 37") are used. However, in the ring member 37 used as the fiber-opening member 33a, as described above, an outwardly convex arcuate surface (outward-facing arcuate surface), which is an outer peripheral surface thereof, functions as the guide surface 33b. On the other hand, in the ring members 37 used as the inner guide member 32a and the fiber-gathering member 34a, inwardly concave arcuate surfaces (inward-facing arcuate surfaces), which are inner peripheral surfaces thereof, function as the guide surfaces 32b and 34b.

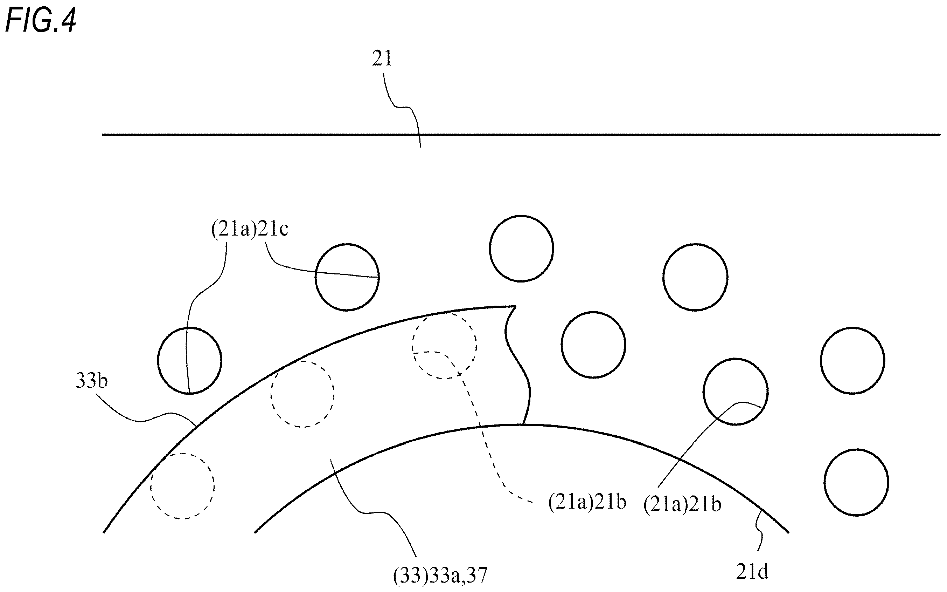

The ring members 37, which are the fiber-opening member 33a, the inner guide member 32a, and the fiber-gathering member 34a, are provided between the first guide plate 21 and the second guide plate 22 such that their centers coincide with the centers of the guide plates 21 and 22 when viewed in the travel direction, and are arranged such that the inner guide member 32a, the fiber-opening member 33a, and the fiber-gathering member 34a are aligned in this order from the upstream side toward the downstream side with respect to the travel direction. Note that, as shown in FIG. 4, the ring member 37 is sized such that, in the state of being provided as described above, its inner peripheral surface is located inward of the inner through holes 21b of the first guide plate 21 and outer ends of the inner through holes 21b in the radial direction are located on an outer peripheral edge thereof, when viewed in a direction opposite to the travel direction.

In addition, in the present embodiment, a fiber-opening member 35a (ring member 37) serving as another fiber-opening portion 35 is provided downstream of the fiber-gathering member 34a (between the fiber-gathering member 34a and the second guide plate 22). That is, the fiber-opening structure 31 includes two fiber-opening portions 33 and 35 (fiber-opening members 33a and 35a). The fiber-opening member 35a on the downstream side also has a guide surface 35b on its outer peripheral surface. Accordingly, in the fiber-opening structure 31 of the present embodiment, the ring member 37 provided between the two fiber-opening members 33a and 35a functions as the fiber-gathering member 34a for the fiber-opening member 33a on the upstream side and as the inner guide member 36a for the fiber-opening member 35a on the downstream side. That is, the ring member 37 serves as both the fiber-gathering member 34a and the inner guide member 36a.

The ring members 37, which are the fiber-opening members 33a and 35a, the inner guide member 32a, and the fiber-gathering member 34a, are attached to the resin tank 11 in such a manner that support posts 39 fixed to the ring members 37 are fitted into the upper wall 13 and the lower wall 16 of the resin tank 11.

More specifically, a pair of support posts 39 and 39 are attached to the outer peripheral surface of the ring member 37. Note that the support post 39 has a cylindrical shape and a length dimension that is slightly greater than the spacing between the upper wall 13 and the lower wall 16 of the resin tank 11. In addition, the support post 39 has small-diameter portions 39a at both end portions, which are smaller in diameter than the other portion, and is formed such that a dimension between the small-diameter portions 39a and 39a is approximately equal to the spacing between the upper wall 13 and the lower wall 16. The pair of support posts 39, 39 are parallel to each other, are oriented in a direction orthogonal to a thickness direction of the ring member 37, and are fixed to the ring member 37 by welding or the like at approximately their middle portions.

On the other hand, the upper wall 13 and lower wall 16 of the resin tank 11 are formed with fitting holes 13h and 16h, respectively, into which the pair of support posts 39 and 39 fixed to the ring member 37 are snugly inserted. Note that the fitting holes 13h and 16h are bottomed holes and are formed to open on the inner surface of the resin tank 11. In addition, the fitting holes 13h and 16h are formed such that their inner diameters are approximately equal to the outer diameters of the small-diameter portions 39a of the support post 39. In addition, the ring members 37 are attached to the resin tank 11 in such a manner that the respective small-diameter portions 39a of the respective support posts 39 fixed to the ring members are snugly inserted into the fitting holes 13h and 16h of the upper wall 13 and the lower wall 16 of the resin tank 11.

The fiber-opening members 33a and 35a, the inner guide member 32a, and the fiber-gathering member 34a are attached in this manner, so that the fiber-opening structure 31 in which the members 32a, 35a, 33a, and 34a are provided in the arrangement as described above is provided within the resin tank 11.

As shown in FIGS. 2 and 3, for the guide member 41, as with the fiber-opening members 33a and 35a, a ring-shaped member having a substantially true circular shape is used. The ring-shaped guide member 41, as with the fiber-opening members 33a and 35a, is provided downstream of the second guide plate 22 such that its center coincides with the center of the second guide plate 22 when viewed in the travel direction. In addition, the guide member 41 also has a pair of support posts 42 and 42 fixed to its outer peripheral surface, and is attached to the resin tank 11 in such a manner that the pair of support posts 42 and 42 are snugly inserted into the upper wall 13 and the lower wall 16 of the resin tank 11.

Note that the guide member 41, as described above, is a member that guides the reinforcing fiber bundles 7 at a position inward of the guide positions of the reinforcing fiber bundles 7 in the second guide plate 22. Therefore, the guide member 41, in its installed state as described above, is sized such that it guides the reinforcing fiber bundles 7 at a position inward of all of the through holes 22a (the inner through holes 22b and the outer through holes 22c) in the second guide plate 22 (the inner peripheral surface 41b that guides the reinforcing fiber bundles 7 is located inward).

In addition, the guide member 41 is a member provided for the purpose of increasing the roundness or fiber volume content of the FRP bar 8 in order to obtain an FRP bar 8 with higher strength. Therefore, the guide member 41 is formed to be smaller in diameter, compared to the fiber-opening members 33a and 35a, and the like. More specifically, in the present embodiment, the guide member 41, in its installed state as described above, is sized such that its outer peripheral edge 41c is located inward of the inner through holes 22b in the second guide plate 22 when viewed in the travel direction.

As shown in FIGS. 2 and 3, in the present embodiment, the impregnation device 2 including the components as described above is configured such that the attachment positions of the second guide plate 22, each ring member 37 (the inner guide member 32a, the fiber-opening members 33a and 35a, the fiber-gathering member 34a) of the fiber-opening structure 31, and the guide member 41 to the resin tank 11 can be changed in the travel direction. The details are as follows.

First, in the present embodiment, the second guide plate 22 is attached to the resin tank 11 by the fitting holes 13h and 16h, which are also used for attaching the ring members 37.

More specifically, a pair of attachment pins 22j are fixed to an upper end-side portion and a lower end-side portion of the second guide plate 22, spaced apart in the longitudinal direction. Note that the attachment pin 22j is a cylindrical member having the same diameter as that of the small-diameter portion 39a of the support post 39 fixed to the ring member 37. Each attachment pin 22j is attached to one end surface of the second guide plate 22 in a manner protruding from an upper end edge or a lower end edge. In addition, a spacing between the attachment pins 22j in the longitudinal direction is set to be approximately equal to the spacing between the pair of fitting holes 13h, 16h formed in the resin tank 11 (the upper wall 13, the lower wall 16) in accordance with the spacing between the pair of support posts 39 and 39 fixed to the ring member 37. The second guide plate 22 is attached to the resin tank 11 in such a manner that each attachment pin 22j is snugly inserted into each of the fitting holes 13h and 16h in the resin tank 11.

As described above, in the resin tank 11, each ring member 37 (inner guide member 32a, fiber-opening members 33a and 35a, fiber-gathering member 34a) and the second guide plate 22 are attached in such a manner that, for each ring member 37, the small-diameter portions 39a of both end portions of the pair of support posts 39 and 39 are snugly inserted into the fitting holes 13h and 16h, and for the second guide plate 22, the four attachment pins 22j are snugly inserted into the fitting holes 13h and 16h. Therefore, the fitting holes 13h and 16h for attaching each member (ring member 37, second guide plate 22) constitute one set consisting of four holes (two in the upper wall 13 and two in the lower wall 16). In addition, the number (9 in the example shown) of sets of the fitting holes 13h and 16h in the resin tank 11 is greater than the total number of ring members 37 and second guide plate 22.

Thereby, in the resin tank 11, the attachment positions of each ring member 37 and the second guide plate 22 to the resin tank 11 are selectable in the travel direction. By the selection, the attachment positions of each ring member 37 and the second guide plate 22 to the resin tank 11 can be changed. In order to realize the change in the attachment positions, the resin tank 11 is configured such that the upper wall 13 can be attached to and detached from the front wall 12, the rear wall 14, and both sidewalls 15 and 15.

In addition, for the guide member 41, the fitting holes 13j and 16j into which the support posts 42 are inserted are provided in multiple sets (two sets in the example shown) in the travel direction. Thereby, the attachment position of the guide member 41 to the resin tank 11 is also changeable (selectable) in the travel direction, as with the ring members 37 or the second guide plate 22.

Note that, as for the position of each member (the ring member 37 such as the fiber-opening members 33a and 35a, the second guide plate 22, and the guide member 41) provided as described above, the positional relationship in the travel direction between the ring member 37 on the most downstream side of the fiber-opening structure 31 and the second guide plate 22 is the relationship of the guide positions in the radial direction between the corresponding ring member 37 and the second guide plate 22, and is set such that a desired guide state (fiber-opening or fiber-gathering) is realized on the ring member 37. In addition, the position of the guide member 41 is set such that the roundness and fiber volume content of the FRP bar 8 reach desired levels, based on the guide position in the radial direction defined by the guide member 41 and the positional relationship with the discharge portion 11b.

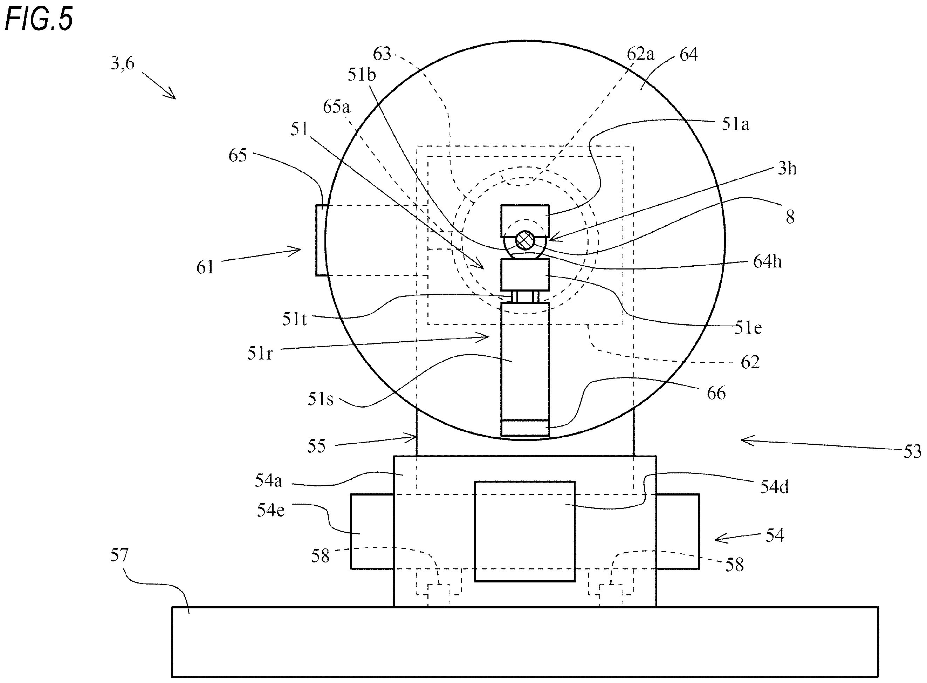

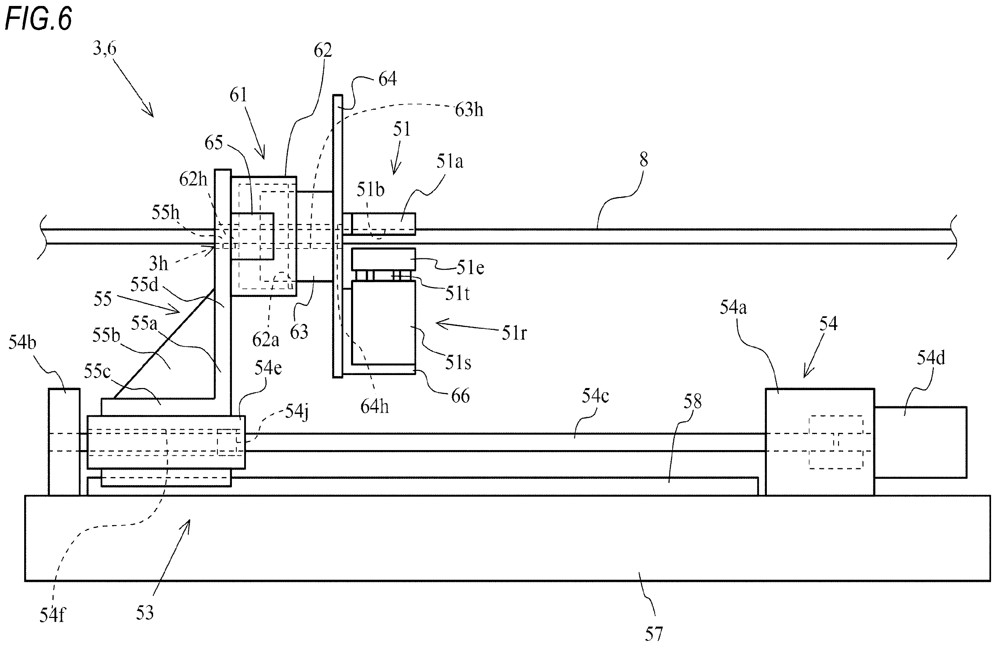

Next, as for the drawing device 3 provided downstream of the impregnation device 2 as described above, as shown in FIGS. 5 and 6, the drawing device 3 of the present embodiment is configured to include a gripping device 51 that grips the FRP bar 8, and a drive device 53 that drives the gripping device 51 to advance and retract in the travel direction.

The gripping device 51 includes a pair of gripping bodies 51a and 51e arranged to sandwich the travel path in an up-and-down direction, and a gripping body drive device 51r that drives the gripping body 51e. As for the pair of gripping bodies 51a and 51e, each of the gripping bodies 51a and 51e is configured as a block-shaped member having a substantially rectangular parallelepiped shape.

The gripping body 51a on an upper side (upper gripping body) of the pair of gripping bodies 51a and 51e is fixedly arranged. Note that, in the present embodiment, the upper gripping body 51a has, on its lower surface, a semicircular groove 51b sized such that approximately the upper half portion of the FRP bar 8 is accommodated therein. In addition, the upper gripping body 51a is provided at a position in which the groove 51b is located directly above the travel path, and the FRP bar 8 is in sliding contact with an inner surface of the groove 51b in the vertical direction in a state in which the FRP bar 8 is present on the travel path. Thereby, at the positions of the gripping bodies 51a and 51e, the FRP bar 8 is in a state in which approximately its upper half is accommodated in the groove 51b of the upper gripping body 51a, and its position in the width direction is restricted.

In addition, the gripping body on a lower side (lower gripping body) 51e is arranged so that its position coincides with that of the upper gripping body 51a in a plan view. In addition, the lower gripping body 51e is provided in such a manner that it is supported by the gripping body drive device 51r. Note that, in the present embodiment, the gripping body drive device 51r uses an air cylinder 51s as a drive means. In addition, the lower gripping body 51e is provided in such a manner that it is attached to a tip end of a piston rod 51t in the air cylinder 51s.

Thereby, when the piston rod 51t of the air cylinder 51s in the gripping body drive device 51r is retracted, the lower gripping body 51e is located at a position (standby position) spaced downward with respect to the travel path (the FRP bar 8 located on the travel path), as shown in FIGS. 5 and 6. In addition, when the piston rod 51t is advanced, the lower gripping body is located at a position (gripping position) where it can grip the FRP bar 8 located on the travel path in cooperation with the upper gripping body 51a. However, the gripping position is set as a position where a gripping force, which does not cause relative movement between the FRP bar 8 and the two gripping bodies 51a and 51e when the gripping device 51 is driven to advance and retract as described below and does not cause excessive deformation of the FRP bar 8, is applied to the FRP bar 8.

In the gripping device 51 configured in this manner, in a state in which the FRP bar 8 is located on the travel path, the lower gripping body 51e is driven to advance from the standby position toward the gripping position by the gripping body drive device 51r, so that the FRP bar 8 is gripped by both the gripping bodies 51a and 51e.

The drive device 53 is configured to include a drive mechanism 54 for driving the gripping device 51 to advance and retract in the travel direction, and a support bracket 55 for supporting the gripping device 51 on the drive mechanism 54. Note that the drawing device 3 includes a support table 57 serving as a base, and the drive mechanism 54 is provided on the support table 57.

As for the drive mechanism 54, more specifically, the drive mechanism 54 in the present embodiment is configured as a so-called ball-screw mechanism 54. As for the ball-screw mechanism 54, a pair of support bodies 54a and 54b are provided on the support table 57 at an interval in the travel direction. A screw shaft 54c in the ball-screw mechanism 54 is rotatably supported at both end portions in a direction parallel to the travel direction by the pair of support bodies 54a and 54b.

Additionally, a servo motor 54d serving as a drive source is connected to one end of the screw shaft 54c. Note that the servo motor 54d is provided in such a manner that it is attached to the support body 54a supporting an end portion on the one end side of the screw shaft 54c.

In addition, the screw shaft 54c is connected to a base member 54e that is driven to advance and retract in the travel direction as the screw shaft 54c is rotationally driven in forward and reverse directions by the servo motor 54d. Specifically, the base member 54e is configured as a plate-shaped member having a rectangular end surface. In addition, the base member 54e is formed with a through hole 54f penetrating in the width direction of the end surface.

In addition, on the support table 57, a pair of rails 58 and 58 are provided in a direction parallel to the travel direction (axial direction of the screw shaft 54c). In addition, the pair of rails 58 and 58 are provided extending between the two support bodies 54a and 54b. The base member 54e is provided so as to be displaceable only in the travel direction while being guided by the pair of rails 58 and 58. Note that, in a state in which the base member 54e is provided on the rails 58, the screw shaft 54c passes through the through hole 54f of the base member 54e. In addition, a nut 54j is screwed onto the screw shaft 54c. Additionally, the nut 54j is fixed to the base member 54e in such a manner that it fits into the through hole 54f of the base member 54e, so that the base member 54e and the screw shaft 54c are connected via the nut 54j. Thereby, the drive mechanism (ball-screw mechanism) 54 rotationally drives the screw shaft 54c in the forward and reverse directions by the servo motor 54d, thereby driving the base member 54e to advance and retract in the travel direction.

In addition, the support bracket 55 is configured to include, as a main body, an L-shaped portion 55a when viewed from a side, and a reinforcing rib 55b provided on an inner side of the L-shaped portion 55a. The support bracket 55 is fixed in such a manner that it is placed on the base member 54e at a portion 55c on one end side with respect to a bent portion of the main body portion 55a. However, the support bracket 55 is provided such that an outer surface of a portion 55d on the other end side with respect to the bent portion is oriented toward the upstream side in the travel direction.

In addition, the support bracket 55 is configured such that the gripping device 51 is attached to the outer surface of the portion 55d on the other end side. The gripping device 51 is attached to the portion 55d on the other end side of the support bracket 55, so that the gripping device 51 is supported on the drive mechanism 54 by the support bracket 55. That is, the support bracket 55 is configured as a member for supporting the gripping device 51 on the drive mechanism 54.

In the drive device 53 as described above, the driving of the servo motor 54d in the drive mechanism 54 is controlled so that the base member 54e is reciprocally driven between two predetermined positions. Thereby, the gripping device 51 is driven to advance and retract along the travel direction. Note that as for the two positions between which the base member 54e is reciprocally driven, when the upstream position in the reciprocating movement is assumed as a side on which the forward movement starts, in the example shown, the forward movement limit is set to a position where the base member 54e is close to the downstream support body 54b, and the return movement limit is set to a position where the base member 54e is close to the upstream support body 54a.

As described above, when the base member 54e in the drive device 53 is reciprocally moved between the two positions, the gripping device 51 is driven to advance and retract between a position (advanced position) corresponding to the return movement limit of the base member 54e and a position (retracted position) corresponding to the forward movement limit. In addition, the driving of the gripping device 51 is controlled such that, in a state in which it is located at the advanced position, the lower gripping body 51e is driven to advance from the standby position to the gripping position to grip the FRP bar 8 located on the travel path, and when the retracted position is reached, the lower gripping body 51e is driven to retract from the gripping position to the standby position to release the gripping on the FRP bar 8.

As the gripping device 51 is driven to advance, the FRP bar 8 is pulled and moved from the upstream side toward the downstream side in the travel direction by the gripping device 51. In addition, since the gripping on the FRP bar 8 by the gripping device 51 is released and the retract drive of the gripping device 51 is started at the time when the retracted position is reached by the advance, the gripping device 51 moves toward the advanced position without interfering with the FRP bar 8. In addition, the FRP bar 8 is again gripped by the gripping device 51 and the advance drive of the gripping device 51 is started at the time when the advanced position is reached by the retract. This series of operations is repeatedly performed, so that the FRP bar 8 is pulled and moved by the amount of forward movement of the gripping device 51 with each operation, and accordingly, the reinforcing fiber bundles 7 connected to the FRP bar 8 are also drawn out (pulled) toward the downstream side.

In addition, as shown in FIGS. 5 and 6, in the present embodiment, the drawing device 3 also serves as the twisting device 6 that twists the reinforcing fiber bundles 7 as described above. More specifically, in the drawing device 3, the gripping device 51 is attached to the support bracket 55 of the drive device 53 via a rotational drive device 61 that rotationally drives the gripping device 51. In addition, the rotational drive device 61 is configured to include a housing 62 attached to the support bracket 55, a rotational shaft 63 rotatably supported with respect to the housing 62, an attachment plate 64 attached to the rotational shaft 63, the gripping device 51 being attached to the attachment plate 64, and a servo motor 65 serving as a drive source.

As for each component in the rotational drive device 61, the housing 62 has a housing shape having a substantially rectangular parallelepiped shape. The housing 62 is attached, on one (attachment surface) of its side surfaces, to the outer surface of the portion 55d on the other end side of the support bracket 55.

In addition, the rotational shaft 63 is provided such that it is mostly accommodated in the housing 62 and a part thereof (one end side) protrudes from a side surface of the housing 62 opposite to the attachment surface. Therefore, the housing 62 is formed with a through hole 62a to allow such protrusion (penetration) of the rotational shaft 63. Additionally, the rotational shaft 63 is rotatably supported with respect to the housing 62 via a bearing (not shown) within the housing 62. Note that the rotational shaft 63 is positioned such that its axial center is approximately aligned with the center of the FRP bar 8 located on the travel path, in a state in which the housing 62 is attached to the support bracket 55.

In addition, the attachment plate 64 is formed to have a disc shape. The attachment plate 64 is attached to the end surface on the one end side of the rotational shaft 63 protruding from the housing 62 such that its center coincides with the axial center of the rotational shaft 63 when viewed in the travel direction.

The servo motor 65 is attached to a side surface of the housing 62 that is orthogonal to the attachment surface, with an orientation in which an axial line of an output shaft 65a is orthogonal to an axial line of the rotational shaft 63 and the output shaft 65a faces toward the rotational shaft 63. Therefore, the servo motor 65 is provided with its output shaft 65a inserted into the housing 62. The servo motor 65 is connected, on the output shaft 65a, to the rotational shaft 63 via a bevel gear (not shown).

In addition, the gripping device 51 is attached to an end surface of the attachment plate 64 of the rotational drive device 61 opposite to the rotational shaft 63 side. Specifically, in the gripping device 51, the upper gripping body 51a is attached to the attachment plate 64 in such a manner that it is fixed to the end surface of the attachment plate 64. Note that the fixing of the upper gripping body 51a to the attachment plate 64 is performed at a position where, when viewed in the travel direction, the center of the arc of the groove 51b in the upper gripping body 51a coincides with the center of the attachment plate 64. In addition, by fixing the air cylinder 51s of the gripping body drive device 51r to the end surface of the attachment plate 64, the lower gripping body 51e is attached to the attachment plate 64 via the air cylinder 51s. Note that the air cylinder 51s is attached to the attachment plate 64 by using the L-shaped bracket 66, in such a manner that the bracket 66 is attached to the end surface of the attachment plate 64 and the air cylinder 51s is fixed in a state of being placed on the bracket 66.

The gripping device 51 is attached to the attachment plate 64 of the rotational drive device 61 in this way, so that the gripping device 51 is attached to the support bracket 55 (drive device 53) to which the rotational drive device 61 is attached, via the rotational drive device 61. The gripping device 51 is attached to the rotational drive device 61 in this way (attached to the support bracket 55 via the rotational drive device 61), so that, as the rotational shaft 63 is rotationally driven by the servo motor 65 in the rotational drive device 61, the gripping device 51 is rotationally driven with the center of the attachment plate 64 (the center of the arc of the groove 51b in the upper gripping body 51a, and the axial center of the rotational shaft 63 in the rotational drive device 61) as the center of rotation.

Note that the attachment plate 64, the rotational shaft 63, and the housing 62 in the rotational drive device 61, and the support bracket 55 are formed with through holes 64h, 63h, 62h, and 55h penetrating in the travel direction so as to allow the FRP bar 8 to pass therethrough. Each of the through holes 64h, 63h, 62h, and 55h is formed at a position where its center coincides with the center of the attachment plate 64 when viewed in the travel direction. In addition, each of the through holes 64h, 63h, 62h, and 55h is formed as a hole having an inner diameter slightly larger than an outer diameter of FRP bar 8.

The through holes 64h, 63h, 62h, and 55h are formed in the respective members in this way, so that an insertion hole 3h penetrating in the travel direction is formed on the travel path in the drawing device 3 (twisting device 6). In addition, the insertion hole 3h has a center aligned with the center of the arc of the groove 51b in the upper gripping body 51a when viewed in the travel direction, and is continuous with the groove 51b. Additionally, during molding, the FRP bar 8 is inserted into the insertion hole 3h.

In addition, as for the rotational drive of the gripping device 51 by the rotational drive device 61, the rotational drive is performed over a period of time during which the gripping device 51 is in a state of gripping the FRP bar 8. In other words, the drive of the servo motor 65 is controlled so that the gripping device 51 is rotationally driven over such a period of time. As the gripping device 51 in the state of gripping the FRP bar 8 in this manner is rotationally driven, rotation is imparted to the FRP bar 8. In addition, in the drawing device 3, since the gripping by the gripping device 51 is performed over a period of time during which the gripping device 51 is driven to advance, the FRP bar 8 is pulled and moved toward the downstream side in the travel direction while being imparted with rotation. As the FRP bar 8 is pulled and moved in this way while being imparted with rotation, the reinforcing fiber bundles 7 are pulled and twisted in the impregnation device 2 on the upstream side of the drawing device 3.

In the FRP bar forming apparatus 1 described above, each reinforcing fiber bundle 7 introduced into the resin tank 11 of the impregnation device 2 is discharged from the resin tank 11 via the first guide plate 21, the fiber-opening structure 31, the second guide plate 22, and the guide member 41 within the resin tank 11. Within the resin tank 11, the plurality of introduced reinforcing fiber bundles 7 are first guided by the first guide plate 21 in such a manner that they are caused to pass through the plurality of through holes 21a (the inner through holes 21b and the outer through holes 21c) in the first guide plate 21. Since the plurality of through holes 21a in the first guide plate 21 are formed in such a manner that they are arranged in substantially true circular patterns centered on the center of the guide plate 21 as described above, the plurality of reinforcing fiber bundles 7 are guided in such a manner that they are aligned on circumferences centered on the center of the first guide plate 21.

Note that the plurality of reinforcing fiber bundles 7 introduced from the introduction portion 11a formed in the upper wall 13 of the resin tank 11 are bent in the first guide plate 21 (through holes 21a) and are deflected toward the fiber-opening structure 31 provided downstream of the first guide plate 21 with respect to the travel direction. Thereby, when each reinforcing fiber bundle 7 is pulled by the drawing device 3 provided downstream of the resin tank 11 as described above, the guiding of the bundles in a bent (deflected) manner acts as drawing resistance. In addition, within the resin tank 11, each reinforcing fiber bundle 7 is guided while being bent by the ring members 37 and the like of the fiber-opening structure 31 in the radial direction of the ring members 37, as described below. Thereby, each reinforcing fiber bundle 7 is guided within the resin tank 11 while being applied with a predetermined tension.

Next, each reinforcing fiber bundle 7 that has passed through the first guide plate 21 as described above is guided by the inner guide member 32a, the fiber-opening member 33a, the fiber-gathering member 34a (inner guide member 36a), and the fiber-opening member 35a in the fiber-opening structure 31 provided downstream of the first guide plate. Specifically, each reinforcing fiber bundle 7 is first guided on the inner guide surface 32b of the inner guide member 32a located on the most upstream side, and then guided on the outer guide surface 33b of the fiber-opening member 33a adjacent to the inner guide member. Next, each reinforcing fiber bundle 7 is guided on the inner guide surface 34b of the fiber-gathering member 34a, and then guided on the outer guide surface 35b of the fiber-opening member 35a located on the most downstream side. Note that the members (the inner guide member 32a, each of the fiber-opening members 33a and 35a, and the fiber-gathering member 34a) are the same ring members 37 as described above, and the outer diameters and inner diameters of the respective members are the same, respectively. Therefore, the guide surfaces 32b and 34b of the inner guide member 32a and the fiber-gathering member 34a are located inward of the guide surfaces 33b and 35b of the two fiber-opening members 33a and 35a on the upstream and downstream sides, respectively, with respect to the radial direction.

Thereby, for the two fiber-opening members 33a and 35a, each reinforcing fiber bundle 7 is guided toward the guide surfaces 33b and 35b of the fiber-opening members 33a and 35a from a position inward of the guide surfaces 33b and 35b in the radial direction, and is brought into a state of being wound around the fiber-opening members 33a and 35a (guide surfaces 33b and 35b). As described above, since a predetermined tension is applied to each reinforcing fiber bundle 7 within the resin tank 11, each reinforcing fiber bundle 7 is pressed against the guide surfaces 33b and 35b of the respective fiber-opening members 33a and 35a. In addition to this, since the guide surfaces 33b and 35b of the respective fiber-opening members 33a and 35a are the outward-facing arcuate surfaces (outwardly convex arcuate surfaces), each reinforcing fiber bundle 7 is subjected to a force that causes it to spread along the arc of the guide surfaces 33b and 35b. As a result, each reinforcing fiber bundle 7 is brought into a fiber-opened state. Each reinforcing fiber bundle 7 is fiber-opened in this way, so that sufficient impregnation of the thermoplastic resin 9 into each reinforcing fiber bundle 7 is achieved.

In addition, as for the guiding of each reinforcing fiber bundle 7 in the fiber-gathering member 34a, each reinforcing fiber bundle 7 is guided toward the guide surface 34b of the fiber-gathering member 34a from a position outward of the guide surface 34b in the radial direction, and is brought into a state of being completely wound around the fiber-gathering member 34a (guide surface 34b). Each reinforcing fiber bundle 7 is pressed against the guide surface 34b of the fiber-gathering member 34a. In addition to this, since the guide surface 34b of the fiber-gathering member 34a is the inward-facing arcuate surface (inwardly concave arcuate surface), each reinforcing fiber bundle 7 brought into the fiber-opened state in the upstream fiber-opening member 33a of the two fiber-opening members 33a and 35a as described above is subjected to a force that causes it to narrow along the arc of the guide surface 34b of the fiber-gathering member 34a. Thereby, each reinforcing fiber bundle 7 is brought into a gathered state. Thereby, the thermoplastic resin 9 present between the reinforcing fibers of the reinforcing fiber bundle 7 in the fiber-opened state moves in multiple directions as the fibers are gathered. As a result, in each reinforcing fiber bundle 7, the thermoplastic resin 9 is widely spread throughout the reinforcing fiber bundle 7, and sufficient impregnation of the thermoplastic resin 9 into each reinforcing fiber bundle 7 is more effectively achieved.

Note that, in the fiber-opening structure 31 that guides each reinforcing fiber bundle 7 as described above, the inner guide member 32a, each of the fiber-opening members 33a and 35a, and the fiber-gathering member 34a are configured by the same ring members 37 as described above. Thereby, the fiber-opening structure 31 is easy to manufacture and also has an advantage in cost. The plurality of reinforcing fiber bundles 7 having passed through the fiber-opening structure 31 are drawn out from the resin tank 11 through the discharge portion 11b (discharge hole 17a), and are twisted (twisted together) by the twisting device 6 provided on the downstream side to be formed into an FRP bar 8. However, within the resin tank 11, the second guide plate 22 is provided between the fiber-opening structure 31 and the discharge portion 11b, and the respective reinforcing fiber bundles 7 are guided in such a manner that they are inserted into the plurality of through holes 22a in the second guide plate 22. Thereby, the displacement in the twisting direction of each reinforcing fiber bundle 7, associated with the twisting by the twisting device 6, is restricted by the second guide plate 22 (through holes 22a), and the effect of the twisting is prevented from propagating to the fiber-opening structure 31.

In addition, the guide member 41 sized such that the outer peripheral edge 41c is located inward of the inner through holes 22b in the second guide plate 22 when viewed in the travel direction is provided between the second guide plate 22 and the discharge portion 11b, as described above, and each reinforcing fiber bundle 7 is guided on the inner peripheral surface 41b of the guide member 41. Thereby, each reinforcing fiber bundle 7 is guided at a position closer to the center of twisting of the plurality of reinforcing fiber bundles 7 that are twisted together by the twisting device 6, and then guided toward the discharge portion 11b.

According to the FRP bar forming apparatus 1 of the present embodiment configured as described above, the impregnation of the thermoplastic resin 9 into each reinforcing fiber bundle 7 is sufficiently and more effectively achieved by the fiber-opening and fiber-gathering actions of the fiber-opening structure 31. In addition to this, the plurality of reinforcing fiber bundles 7 sufficiently impregnated with the thermoplastic resin 9 are twisted together by the twisting device 6 to be formed into an FRP bar 8, and during the twisting, each reinforcing fiber bundle 7 is guided to a position close to the center of twisting by the guide member 41, and then the reinforcing fiber bundles 7 are allowed to be twisted, so that an FRP bar 8 having high roundness and fiber volume content and sufficient strength can be manufactured. Note that, even when forming is performed by such twisting, the displacement in the twisting direction of each reinforcing fiber bundle 7, associated with the twisting, is restricted by the second guide plate 22 provided downstream of the fiber-opening structure 31, so the fiber-opening and fiber-gathering actions (impregnation action of the thermoplastic resin 9) of the fiber-opening structure 31 are not impaired.

In addition, in the impregnation device 2 described above, as described above, each ring member 37 (the inner guide member 32a, each of the fiber-opening members 33a and 35a, the fiber-gathering member 34a), the second guide plate 22, and the guide member 41 in the fiber-opening structure 31 are configured such that the attachment positions to the resin tank 11 can be changed in the travel direction. Note that, by changing the attachment position, the bent state (degree of pressing force) of the reinforcing fiber bundle 7 relative to each member is changed. Therefore, according to the configuration of the impregnation device 2, even when the type of reinforcing fiber bundle 7 to be used (strength of the reinforcing fiber, and the like) or the strength required for the FRP bar 8 to be manufactured (impregnation state of the thermoplastic resin 9 in each reinforcing fiber bundle 7, and the like) is changed, it is possible to accommodate such a change.

Note that the present invention is not limited to the embodiment (the above embodiment) of the FRP bar forming apparatus 1 described above, and can also be implemented in other embodiments (variations) such as (1) to (13) below.

(1) In the above embodiment, the fiber-opening portions 33 and 35 are configured by the fiber-opening members 33a and 35a that are provided independently from the inner guide portion 32 (inner guide member 32a) and the like. Additionally, in the above embodiment, the ring-shaped members are employed as the fiber-opening members 33a and 35a. However, in the present invention, even when the fiber-opening portions 33 and 35 are configured by the fiber-opening members 33a and 35a as described above, the fiber-opening members 33a and 35a are not limited to the ring-shaped members and may be disc-shaped members. In addition, when the ring-shaped members or disc-shaped members are used as the fiber-opening members 33a and 35a, the fiber-opening members 33a and 35a are not limited to being formed such that the outer peripheral surface thereof forms a substantially true circular shape. That is, the outer peripheral surface may be formed to have another shape, such as an elliptical shape, as long as the outward-facing arcuate surface (outwardly convex arcuate surface) that functions as a guide surface is continuously present on the outer peripheral surface.

In addition, the fiber-opening members 33a and 35a are not limited to those having the outward-facing arcuate surface on the outer peripheral surface, such as a ring-shaped member or a disc-shaped member. Specifically, the fiber-opening members 33a and 35a may be plate-shaped members having the same rectangular shape as the guide plates 21 and 22, in which a plurality of through holes for guiding the reinforcing fiber bundles 7 (for allowing the bundles to pass therethrough) are formed at equal intervals, for example, around the center thereof, and a surface on the central (inner) side of the inner peripheral surface of each through hole is formed to be an outwardly convex arcuate surface.

Note that each of the through holes may be formed so as to be provided for each of the plurality of reinforcing fiber bundles 7, or may be formed so as to be provided as a common hole for every two or more reinforcing fiber bundles 7. When the fiber-opening members 33a and 35a are configured in this way, a surface on the central (inner) side of each through hole becomes an outward-facing arcuate surface. Additionally, in such a configuration, each through hole may be formed such that the outward-facing arcuate surface on the inner peripheral surface is positioned on a circumference of a substantially true circle centered on the center, or may be formed so as to be positioned on a circumference of a circle such as an ellipse centered on the center.

(2) In the above embodiment, the inner guide portion 32 is configured by the inner guide member 32a that is provided independently from the fiber-opening portion 33 (fiber-opening member 33a) and the like. In addition, in the above embodiment, as the inner guide member 32a, a member having the same ring shape and the same size (outer diameter and inner diameter) as those of the fiber-opening member 33a is used. However, in the present invention, even when the inner guide portion 32 is configured by the inner guide member 32a as described above, and the inner guide member 32a is configured by the ring-shaped member, as with the fiber-opening member 33a, its size may be different from that of the fiber-opening member 33a. For example, in the above embodiment, a ring-shaped member having a smaller diameter than those of the fiber-opening members 33a and 35a is used as the guide member 41, but the ring-shaped member used as the guide member 41 may also be used as the inner guide member.

In addition, the inner guide member 32a is not limited to a ring-shaped member, but may be a plate-shaped member having through holes formed therein for guiding the reinforcing fiber bundles 7 (for allowing the reinforcing fiber bundles 7 to pass therethrough). Note that, when the inner guide member 32a is configured by such a plate-shaped member, the member may be formed by, for example, a rectangular plate member similar to the guide plate. Additionally, the inner guide member 32a may have a through hole formed as a single hole, common to the plurality of reinforcing fiber bundles 7, centered on the center of the plate member. Alternatively, the inner guide member 32a may have a plurality of through holes formed in such a manner that the through holes are arranged at equal intervals, for example, around the center thereof. However, when the inner guide member 32a is formed with a plurality of through holes in this way, each of the through holes may be formed so as to be provided for each of the plurality of reinforcing fiber bundles 7, or may be formed so as to be provided as a common hole for every two or more reinforcing fiber bundles 7.

For reference, when the inner guide member 32a is configured as such, a position of a surface of the through hole guiding the reinforcing fiber bundle 7 relative to the center (when the through hole is a single hole common to the plurality of reinforcing fiber bundles 7, the inner diameter of the through hole; when the plurality of through holes are formed as described above, a portion on an outer side of the inner peripheral surface of each through hole relative to the center) is naturally positioned inward of the outward-facing arcuate surface of the fiber-opening portion 33 (fiber-opening member 33a). In addition, when the inner guide member 32a is configured by a plate-shaped member having a plurality of through holes formed therein as described above, the inner guide member 32a may also serve as the first guide plate 21. Specifically, the first guide plate 21 in the above embodiment may be omitted, and the inner guide member 32a may be arranged at that position such that the inner guide member 32a also functions as the first guide plate 21.

(3) In the above embodiment, the fiber-opening structure 31 includes the fiber-gathering portion 34, and furthermore, the fiber-gathering portion 34 is configured by the fiber-gathering member 34a that is provided independently from the fiber-opening portions 33 and 35 (fiber-opening members 33a and 35a). In addition, in the above embodiment, as the fiber-gathering member 34a, a member having the same ring shape and the same size (outer diameter and inner diameter) as those of the fiber-opening members 33a and 35a is used, as with the inner guide member 32a. However, in the present invention, even when the fiber-opening structure 31 includes the fiber-gathering portion 34 and the fiber-gathering portion 34 is configured by the fiber-gathering member 34a as described above, it is not limited to being configured as in the above embodiment, as with the inner guide member 32a.

Specifically, even when the fiber-gathering member 34a is configured by a ring-shaped member, as with the fiber-opening members 33a and 35a, the fiber-gathering member 34a may have a different (smaller) size from those of the fiber-opening members 33a and 35a. In addition, the fiber-gathering member 34a is not limited to a ring-shaped member, and may be a plate-shaped member having a single through hole or multiple through holes formed therein, as with the inner guide member 32a being configured by a plate-shaped member. Note that when the fiber-gathering member 34a is configured by such a plate-shaped member, if the through hole is a single hole, the inner peripheral surface of the through hole becomes an inward-facing arcuate surface, and if a plurality of through holes are formed, a portion on an outer side of the inner peripheral surface of each through hole relative to the center of the plate member becomes an inward-facing arcuate surface.

(4) In the above embodiment, the fiber-opening structure 31 is configured such that one fiber-gathering member 34a (fiber-gathering portion 34) is provided between two fiber-opening members 33a and 35a (fiber-opening portions 33 and 35). However, the fiber-opening structure of the present invention is not limited to the configuration in which the fiber-gathering portion 34 and the fiber-opening portions 33 and 35 are provided in such numbers. For example, with respect to the configuration of the above embodiment, the fiber-opening portion 35 on the most downstream side may be omitted, and the fiber-opening structure may be configured to include one fiber-opening portion 33 and one fiber-gathering portion 34. In addition, with respect to the configuration of the above embodiment, a fiber-gathering portion may be provided further downstream of the fiber-opening portion 35 on the most downstream side, and the fiber-opening structure may be configured to include two fiber-opening portions and two fiber-gathering portions.

(5) In the impregnation device 2 of the above embodiment, the four ring members 37 are arranged in the travel direction, and each reinforcing fiber bundle 7 is guided as described above with respect to each ring member 37, so that the ring member 37 on the most upstream side functions only as the inner guide portion 32, and the second and most downstream ring members 37 (even-numbered ring members) from the upstream side function only as the fiber-opening portions 33 and 35, and the ring member 37 located between the fiber-opening portions 33 and 35 serves as both the fiber-gathering portion 34 and the inner guide member 36a (inner guide portion). However, even when the impregnation device 2 has the same configuration as in the above embodiment, it is not limited to the configuration in which each ring member 37 functions (only) in the manner described above.

Specifically, first, the first guide plate 21 provided upstream of the ring member 37 is configured such that the inner through holes 21b among the plurality of through holes 21a are formed at positions to guide the reinforcing fiber bundles 7 at a location inward of the outer peripheral surface of the ring member 37. In addition, for the reinforcing fiber bundles 7 that are caused to pass through the outer through holes 21c in the first guide plate 21, each reinforcing fiber bundle 7 is guided by each ring member 37 in the same manner as in the above embodiment. In this case, each ring member 37 functions in the same manner as in the above embodiment.

On the other hand, for the reinforcing fiber bundles 7 that are caused to pass through the inner through holes 21b, in contrast to the above, they are guided by the respective ring members 37 in the order of outer side, inner side, outer side, and inner side from the upstream side. In this case, for the ring members 37, the ring member 37 on the most upstream side functions as a fiber-opening portion. For the inner guide portion, the first guide plate 21 (the inner through holes 21b) located on the upstream side also functions as the inner guide portion. In addition, for the ring members 37 from the second one onward from the upstream side, the odd-numbered ring members 37 function as fiber-opening portions, and the even-numbered ring members 37 function as fiber-gathering portions. In addition, among the ring members 37 that function as the fiber-gathering portions, the ring member 37 that is present on the downstream side also functions as the inner guide portion.

In this way, by configuring the first guide plate 21 as described above, and then guiding the reinforcing fiber bundles 7, which are caused to pass through the respective through holes 21a, in the two manners described above, for example, the ring member 37 on the most upstream side serves as both the inner guide portion and the fiber-opening portion. In addition, the remaining ring members 37 serve as both the fiber-opening portion and the fiber-gathering portion. That is, even when the configuration of the fiber-opening structure 31 itself is the same as in the above embodiment, each ring member 37 is not limited to functioning as in the above embodiment, and it is also possible to allow the ring member to have multiple functions.

(6) In addition, as described above, when the inner guide portion 32, the fiber-opening portions 33 and 35, and the fiber-gathering portion 34 are configured by the inner guide member 32a, the fiber-opening members 33a and 35a, and the fiber-gathering member 34a, respectively, each member may be formed by a plate-shaped member (plate member) as described above. In this case, each plate member may be provided with multiple functions by, for example, forming a single hole at its center, as in the inner guide member (fiber-gathering member) described above, in addition to the plurality of through holes formed as in the fiber-opening member described above.

Specifically, for example, when the plate member is provided in the same number (4) as the ring members 37 of the above embodiment, each plate member is configured as such, and the inner through holes 21b among the plurality of through holes 21a in the first guide plate 21 are formed at the same positions as in (5) above. In addition, for the reinforcing fiber bundles 7 that are caused to pass through the outer through holes 21c in the first guide plate 21, the bundles are guided by the respective plate members such that, in sequence from the upstream side, they pass through the single hole, the through hole, the single hole, and the through hole. On the other hand, for the reinforcing fiber bundles 7 that are caused to pass through the inner through holes 21b, the bundles are guided by the respective plate members such that, in sequence from the upstream side, they pass through the single hole, the through hole, and the single hole.

Thereby, the most upstream plate member serves as both the inner guide portion and the fiber-opening portion. In addition, for the inner guide portion relative to the fiber-opening portion, the first guide plate 21 (the inner through holes 21b) functions as the inner guide portion. Additionally, the remaining plate members serve as both the fiber-opening portion and the fiber-gathering portion. Among the plate members that also serve as the fiber-gathering portion, the plate member that is present on the downstream side also functions as the inner guide portion.

(7) In addition, the inner guide portion 32, the fiber-opening portions 33 and 35, and the fiber-gathering portion 34 described above are all configured by independent members from one another (the inner guide member 32a, the fiber-opening members 33a and 35a, the fiber-gathering portion 34a) for the plurality (all) of reinforcing fiber bundles 7. However, the inner guide portion 32, the fiber-opening portions 33 and 35, and the fiber-gathering portion 34 are not limited to being configured by such independent members. For example, the fiber-opening structure 31 is configured such that, in place of the plurality of ring members in the above embodiment, members (coil members) having a spiral coil shape are provided at those positions. Note that the outer diameter and inner diameter of the coil member are the same in size as those of the ring member in the above embodiment. With such a configuration of the fiber-opening structure 31, each portion of the coil member may serve as a substitute for the ring member in the above embodiment.

(8) In the above embodiment, the impregnation device 2 is configured such that the attachment positions of the inner guide member 32a, the fiber-opening members 33a and 35a, and the fiber-gathering member 34a, which are configured by the ring members 37, to the resin tank 11 can be changed in the travel direction. In the above embodiment, as a configuration for this, the impregnation device 2 is configured to allow the attachment position of each member to be changed, for example, by changing the fitting holes 13h and 16h, into which the support posts 39 fixed to each member are snugly inserted, to other fitting holes 13h and 16h. However, in the impregnation device 2, the configuration for allowing the attachment position of each member to be changed is not limited to such a configuration, and for example, the following configuration is also considered.

First, an impregnation device is configured such that a support member for supporting each member (support post 39) is provided within the resin tank 11. Note that the support member is configured by, for example, a plate member, and is provided in two sets so as to correspond to a pair of upper and lower sets, each corresponding to each of the pair of support posts 39 and 39 attached to each member. In addition, each of the support members has a length dimension extending over a range in which the respective members are provided, so as to be common to the plurality of members. In addition, each of the support members is provided at a position spaced apart from the upper wall 13 and the lower wall 16 of the resin tank 11 by a support leg or the like. In addition to this, each of the support members is formed with an elongated hole, into which the support post 39 is inserted, along its longitudinal direction (travel direction).

In addition, as for the support post 39 of each member, each support post 39 has a dimension slightly greater than a spacing between the pair of upper and lower support members (to an extent that end portions protrude when inserted into the elongated holes of the respective support members). In addition, the end portion of each support post 39 is formed with a male thread onto which a nut is screwed. In this configuration, each member is attached to the resin tank 11 by inserting the pair of support posts 39 and 39 into the elongated holes of the corresponding support members, screwing nuts onto the male threads at the end portions thereof, and firmly tightening the nuts to fix the positions. In addition, when changing the position of each member, the change in position is performed by loosening the nut and moving each support post 39 along the elongated hole.

In addition, in the impregnation device 2, when the type of reinforcing fiber bundle 7 to be used or the strength required for the FRP bar 8 to be manufactured is not changed, the configuration for allowing the attachment position of each member to be changed may be omitted.

(9) In the above, the fiber-opening structure 31 has been described on the premise that it includes the fiber-gathering portion 34 (fiber-gathering member 34a). However, in the fiber-opening structure 31 of the present invention, when the fiber-opening action of the fiber-opening portion 33 (fiber-opening member 33a) enables sufficient impregnation of the thermoplastic resin 9 into the reinforcing fiber bundle 7 to the required degree, the fiber-gathering portion 34 may be omitted. Note that, in this case, the fiber-opening structure 31 is configured such that only one fiber-opening portion 33 is provided downstream of the inner guide portion 32.

(10) As for the plurality of through holes 21a and 22a for guiding the reinforcing fiber bundles 7, which are formed in the respective guide plates 21 and 22 (the first guide plate 21 and the second guide plate 22), the through holes 21a and 22a are not limited to round holes as shown, and may be elongated holes or circular holes. In addition, in the above embodiment, the through holes 21a and 22a are formed in the guide plates 21 and 22, respectively, in such a manner that they are arranged in substantially true circular patterns. However, in each of the guide plates 21 and 22 of the present invention, the plurality of through holes 21a, 22a are not limited to being formed in such a manner, and may be formed in such a manner that they are arranged in an elliptical pattern or the like. In addition, in the above embodiment, the through holes 21a, 22a are formed in the guide plate 21, 22 in two rows at different radial positions. However, in each of the guide plates 21 and 22 of the present invention, the plurality of through holes 21a and 22a are not limited to being formed in such a manner, and may be formed in one row or in three or more rows.

In addition, as for the second guide plate 22, in the above embodiment, the impregnation device 2 is configured, in the same manner as the configuration for changing the attachment positions of the respective members in the fiber-opening structure 31, such that the attachment position of the second guide plate 22 to the resin bath 11 can be changed in the travel direction. However, the configuration for allowing the attachment position of the second guide plate 22 to be changed is not limited to the above embodiment, and may be modified in the same manner as the configuration for allowing the attachment position of each member to be changed in (8) above. In addition, the configuration for allowing the attachment position of the second guide plate 22 to be changed may be omitted.

(11) In the above embodiment, a member having a ring shape and a substantially true circular shape is used as the guide member 41, as with the inner guide member 32a and the fiber-gathering member 34a. However, even when the guide member 41 is a ring-shaped member as described above, it is not limited to being formed into a substantially true circular shape, and may have an elliptical shape, or the like. In addition, the guide member 41 is not limited to the ring-shaped member, and may be configured by a plate-shaped member, as with the inner guide member 32a or the fiber-gathering member 34a. Specifically, the guide member 41 may be configured by a plate-shaped member having a single through hole with an inner diameter configured to guide the reinforcing fiber bundle 7 at a position inward of the through holes 22a of the second guide plate 22 through which the reinforcing fiber bundles 7 are caused to pass.

In addition, the configuration for allowing the attachment position of the guide member 41 in the impregnation device 2 to be changed may be modified in the same manner as with each member in the fiber-opening structure 31, and may also be omitted.

In addition, the guide member 41 may be omitted from the impregnation device 2 of the present invention. Specifically, if the roundness or fiber volume content of the FRP bar 8 manufactured reaches a desired level even without the guide member 41, the guide member 41 may be omitted. In addition, it is also possible to provide the second guide plate 22 with the function of the guide member 41 by forming all of the through holes 22a in the second guide plate 22 so as to be located inward of the guide surface of the most downstream fiber-opening portion or fiber-gathering portion in the fiber-opening structure 31.

(12) In the above embodiment, the drawing device 3 is configured to also serve as the twisting device 6, and the drawing device 3 is configured to drive the gripping device 51 to advance in a state in which the gripping device grips the FRP bar 8, and to rotationally drive the gripping device 51 over the period of the advancing drive. However, the drawing device 3 is not limited to the configuration as in the above embodiment, even when it also serves as the twisting device 6. For example, the device that serves as both the drawing device 3 and the twisting device 6 may be configured to rotationally drive a pair of rollers arranged to sandwich FRP bars in such a manner that their axial directions intersect, as disclosed in JP2023-69315A.

In addition, the drawing device 3 and the twisting device 6 are not limited to being configured such that the drawing device 3 also serves as the twisting device 6 as described above, and may be provided independently from each other. For example, in the above embodiment, the drawing device 3 may be provided in such a manner that the rotational drive device 61 is omitted from the device configured as the drawing device 3 (twisting device 6), and the gripping device 51 is directly supported by the support bracket 55 of the drive device 53. In addition, a device configured in the same manner as the configuration for twisting in the drawing device 3 of the above embodiment may be provided as a twisting device that is separate from the drawing device. Note that in this case, the twisting device is provided upstream of the drawing device. Further, in this case, the drawing-out operation by the drawing device and the twisting operation by the twisting device are performed alternately (not simultaneously).

In addition, on the downstream side of the device configured to twist an FRP bar (reinforcing fiber bundle) using the pair of rollers, a device configured using a pair of rollers may be provided as a device for drawing out the FRP bar. In this case, the device with a pair of rollers on the upstream side corresponds to the twisting device, and the device with a pair of rollers on the downstream side corresponds to the drawing device.

(13) In the above embodiment, the FRP bar forming apparatus 1 is configured such that the resin tank 11 has the introduction portion 11a formed in the upper wall 13 and each reinforcing fiber bundle 7 from the supply device 4 is introduced into the resin tank 11 from above. However, the FRP bar forming apparatus 1 as the preamble of the present invention is not limited to such a configuration. For example, first, as for the resin tank 11, instead of the configuration of the above embodiment, the introduction frame 18 is configured such that the upper opening portion thereof is closed. That is, the resin tank 11 is configured to be open toward the supply device 4 side only in the upper region of the front wall portion 18a of the introduction frame 18. In addition, the FRP bar forming apparatus 1 may be configured such that each reinforcing fiber bundle 7 from the supply device 4 is guided toward the resin tank 11 at a height position within a range of the opening in the resin tank 11 (introduction frame 18) and introduced into the resin tank 11. Note that in this configuration, the opening in the introduction frame 18 becomes the introduction portion 11a of the resin tank 11.

The present invention is not limited to the above embodiment and the modified embodiments, and can be variously changed without departing from the gist of the present invention.

### REFERENCE SIGNS LIST

- 1:: FRP bar forming apparatus
- 2:: impregnation device
- 3:: drawing device
- 3h:: insertion hole
- 4:: supply device
- 4a:: material roll
- 5:: cooling device
- 6:: twisting device
- 7:: reinforcing fiber bundle
- 8:: FRP bar
- 9:: thermoplastic resin
- 11:: resin tank
- 11a:: introduction portion
- 11b:: discharge portion
- 12:: end wall (front wall)
- 12a:: attachment hole
- 13:: upper wall
- 13a:: opening portion
- 13h, 13j:: fitting hole
- 14:: end wall (rear wall)
- 14a:: through hole
- 15:: sidewall
- 16:: lower wall
- 16h, 16j:: fitting hole
- 17:: discharge member
- 17a:: discharge hole
- 17b:: outlet-side portion
- 17c:: inlet
- 18:: introduction frame
- 18a, 18b, 18c, 18d:: wall portion
- 18a:: front wall portion
- 19:: supply nozzle
- 21:: first guide plate
- 21a:: through hole
- 21b:: inner through hole
- 21c:: outer through hole
- 21d:: central hole
- 22:: second guide plate
- 22a:: through hole
- 22b:: inner through hole
- 22c:: outer through hole
- 22d:: central hole
- 22j:: attachment pin
- 31:: fiber-opening structure
- 32:: inner guide portion
- 32a:: inner guide member
- 32b:: guide surface
- 33:: fiber-opening portion
- 33a:: fiber-opening member
- 33b:: guide surface (outward-facing arcuate surface)
- 34:: fiber-gathering portion
- 34a:: fiber-gathering member
- 34b:: guide surface (inward-facing arcuate surface)
- 35:: fiber-opening portion
- 35a:: fiber-opening member
- 35b:: guide surface (outward-facing arcuate surface)
- 36a:: inner guide member
- 37:: ring member
- 39:: support post
- 39a:: small-diameter portion
- 41:: guide member
- 41b:: inner peripheral surface
- 41c:: outer peripheral edge
- 42:: support post
- 51:: gripping device
- 51a:: gripping body (upper gripping body)
- 51b:: groove
- 51e:: gripping body (lower gripping body)
- 51r:: gripping body drive device
- 51s:: air cylinder
- 51t:: piston rod
- 53:: drive device
- 54:: ball-screw mechanism
- 54a, 54b:: support body
- 54c:: screw shaft
- 54d:: servo motor
- 54e:: base member
- 54f:: through hole
- 54j:: nut
- 55:: support bracket
- 55a:: L-shaped portion
- 55b:: rib
- 55c:: portion on one end side
- 55d:: portion on other end side
- 55h:: through hole
- 57:: support table
- 58:: rail
- 61:: rotational drive device
- 62:: housing
- 62a:: through hole
- 62h:: through hole
- 63:: rotational shaft
- 63h:: through hole
- 64:: attachment plate
- 64h:: through hole
- 65:: servo motor
- 65a:: output shaft
- 66:: bracket

## Claims

1. An FRP bar forming apparatus (1) configured to form an FRP bar (8) from a plurality of reinforcing fiber bundles (7), the FRP bar forming apparatus (1) comprising:
an impregnation device (2) including a resin tank (11) configured to store a thermoplastic resin (9), the resin tank (11) including: an introduction portion (11a) through which each of the reinforcing fiber bundles (7) being introduced; and a discharge portion (11b) through which each of the reinforcing fiber bundles (7) being discharged in a gathered state; and
a drawing device (3) being provided downstream of the resin tank (11),
wherein the FRP bar forming apparatus (1) is configured to draw out each of the reinforcing fiber bundles (7) passing through the resin tank (11) from the resin tank (11) by the drawing device (3),
wherein the FRP bar forming apparatus (1) further comprises a twisting device (6) provided downstream of the resin tank (11) and configured to twist the reinforcing fiber bundles (7) so as to twist together the plurality of reinforcing fiber bundles (7) in the gathered state, and
wherein the impregnation device (2) includes:
a first guide plate (21) provided in the resin tank (11), the first guide plate (21) includes a plurality of through holes (21a) formed therein for allowing the plurality of reinforcing fiber bundles (7) from the introduction portion (11a) to pass therethrough, the plurality of through holes (21a) being arranged along a circumferential pattern,
a second guide plate (22) provided between the first guide plate (21) and the discharge portion (11b), the second guide plate (22) includes a plurality of through holes (22a) formed therein for allowing the plurality of reinforcing fiber bundles (7) to pass therethrough, the plurality of through holes (22a) being arranged along a circumferential pattern, and
a fiber-opening structure (31) provided upstream of the second guide plate (22), the fiber-opening structure (31) includes:
a fiber-opening portion (33) including an outward-facing arcuate surface (33b) being convex outwardly and serving as a guide surface for guiding the reinforcing fiber bundles, and
an inner guide portion (32) configured to guide the reinforcing fiber bundles (7) at a position inward of the outward-facing arcuate surface (33b), on an upstream side of the fiber-opening portion (33).

2. The FRP bar forming apparatus (1) according to claim 1, wherein the fiber-opening portion (33) of the fiber-opening structure (31) is configured by a fiber-opening member (33a) having the outward-facing arcuate surface (33b) on an outer peripheral surface thereof.

3. The FRP bar forming apparatus (1) according to claim 1 or 2, wherein the fiber-opening structure (31) further comprises a fiber-gathering portion (34) including an inward-facing arcuate surface being concave inwardly and serving as a guide surface for guiding the reinforcing fiber bundles (7), on a downstream side of the fiber-opening portion (33).

4. The FRP bar forming apparatus (1) according to claim 1 or 2, wherein the impregnation device (2) further comprises a guide member (41) provided between the second guide plate (22) and the discharge portion (11b) and configured to guide the reinforcing fiber bundles (7) at a position inward of all of the through holes (22a) in the second guide plate (22).
